# EUROPEAN PATENT SPECIFICATION

(11) **EP 1 889 519 B1**
(45) Date of publication and mention of the grant of the patent: **18.03.2009**
(21) Application number: 06765708.0
(22) Date of filing: 24.05.2006
(51) Int. Cl.: H05B 33/08

(54) **FLUX COMPENSATION LED DRIVER SYSTEM AND METHOD**
SYSTEM UND VERFAHREN FÜR EINEN FLUSSAUSGLEICHS-LED-TREIBER
SYSTEME ET PROCEDE DE COMMANDE DE DEL. A COMPENSATION DE FLUX

(30) Priority: 25.05.2005 US 684344 P
(43) Date of publication of application: 20.02.2008
(73) Proprietor: Koninklijke Philips Electronics N.V., 5621 BA Eindhoven (NL)
(72) Inventor: CLAUBERG, Bernd, Briarcliff Manor, New York 10510-8001 (US); WENDT, Matthias M., Briarcliff Manor, New York 10510-8001 (US); ACKERMANN, Bernd, Briarcliff Manor, New York 10510-8001 (US); MARTINY, Christoph, Briarcliff Manor, New York 10510-8001 (US); SAUERLAENDER, Georg, Briarcliff Manor, New York 10510-8001 (US); HENTE, Dirk, Briarcliff Manor, New York 10510-8001 (US)
(74) Representative: Bekkers, Joost J.J
(86) International application number: PCT/IB2006/051664
(87) International publication number: WO 2006/126172

(56) References cited:
- WO-A2-02/47438
- US-A1- 2004 245 946
- US-A1- 2005 062 446

## Description

This invention relates generally to light emitting diode (LED) drivers, and more specifically to a system and method for LED driving with flux compensation.

Light emitting diodes (LEDs) are being more widely used in a variety of applications, such as traffic signals and signage. LEDs are expected to replace incandescent lamps in automotive applications in the near future and to replace incandescent, halogen, and fluorescent lamps in many general illumination applications within a few years. LEDs provide bright lighting with high efficiency.

LEDs present certain problems, however, due to operating characteristics and manufacturing limitations. LEDs exhibit large changes in current with small changes in voltage, so the LED drivers must control current to the LEDs. While one solution has been to limit current by placing a resistor in series with the LEDs, such a solution fails to optimize for functionality and efficiency requirements of particular LEDs in particular applications.

Large process variations in the manufacture of LEDs results in large variations in operating characteristics. To account for operating characteristic variations, the manufacturers sample the operating characteristics and sort the LEDs into batches having similar operating characteristics, called bins. Examples of bins are voltage bins, which account for voltage differences; flux bins, which account for light output differences at a given drive current; and color bins, which account for color differences. The manufacturer typically assigns a bin code to LEDs having particular characteristics. For example, a flux bin code of P can be assigned to LEDs producing 20 to 30 lumens flux at a given current and a flux bin code of Q can be assigned to LEDs producing 30 to 40 lumens flux at the same current.

LED drivers can compensate for variations between voltage bins by current control, but no simple correction is available to compensate for variations between flux bins. Presently, different LED drivers with different drive current settings are used for each flux bin, or LED drivers are modified internally to provide an LED driver with the desired drive current setting. Use of different LED drivers for different flux bins causes additional expense in manufacturing and stocking the different LED drivers for each different drive current setting.

It would be desirable to provide a LED driving system and method that overcomes the above disadvantages.

One aspect of the invention provides a driver for a light emitting diode (LED) string according to claim 1.

Another aspect of the invention provides a flux control method for a light emitting diode (LED) string according to claim 11.

Another aspect of the invention provides a flux control system for a light emitting diode (LED) string according to claim 15.

Another aspect of the invention provides a lighting system including a light emitting diode (LED) driver according to claim 18.

The foregoing and other features and advantages of the invention will become further apparent from the following detailed description of the presently preferred embodiment, read in conjunction with the accompanying drawings. The detailed description and drawings are merely illustrative of the invention rather than limiting, the scope of the invention being defined by the appended claims and equivalents thereof.
**FIG. 1** is a block diagram of an LED driving system with flux compensation made in accordance with the present invention;
**FIGS. 2-4** are schematic diagrams for embodiments of LED driving circuits with flux compensation made in accordance with the present invention; and
**FIGS. 5 & 6** are schematic diagrams of a lighting system made in accordance with the present invention.

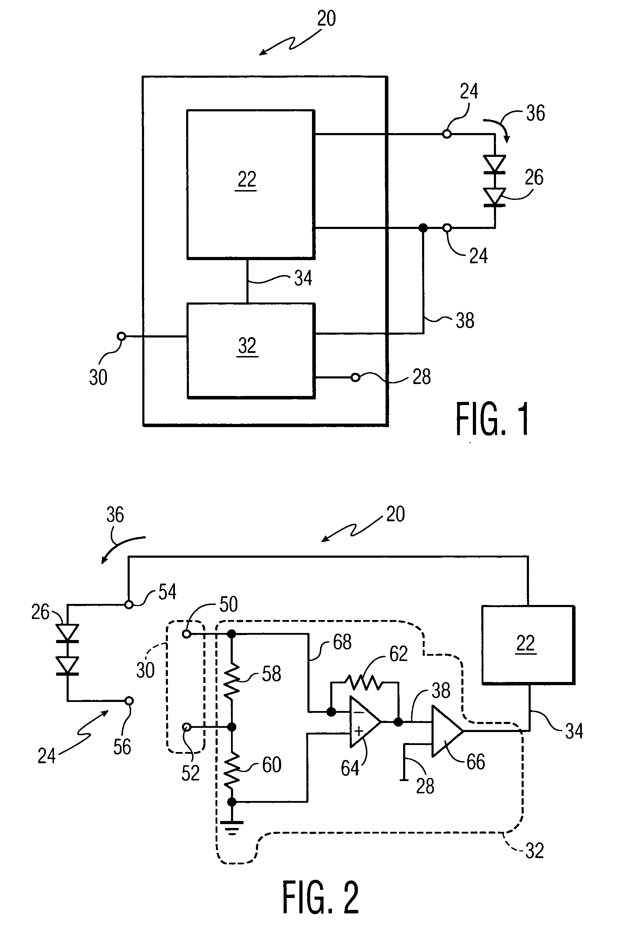

**FIG.** 1 is a block diagram of an LED driving system with flux compensation made in accordance with the present invention. The LED driver compensates for manufacturing flux variations between LED strings by controlling drive current through a particular LED string in accordance with the flux bin index of the particular LED string. The LED driver determines the proper flux indexed drive current from information at a flux index selector, such as a connection point, changeable component, and/or data connection.

LED driver **20** includes a power converter **22,** an LED connector **24,** and a gain block **32.** The power converter **22** is responsive to a gain signal **34** from the gain block **32** and generates flux indexed drive current **36** indicated by the arrow in **FIG.1**. The LED connector **24** is operably connected to the power converter **22** to provide the flux indexed drive current 36 to LED string 26, which has an associated flux bin index. The gain block 32 compares a sensed drive current signal **38** and a drive current setpoint **28** to generate the gain signal **34.** The gain block 32 is responsive to a flux index selector **30** to adjust the gain signal **34** for the associated flux bin index.

The LED string **26** includes one or more LEDs connected across the LED connector **24**. The LED string **26** has an associated flux bin index indicating light output for the LEDs in the LED string **26** at a given drive current. The associated flux bin index can be a flux bin code obtained from the LED manufacturer or can be determined experimentally. The power converter **22** can be any power converter capable of providing flux indexed drive current **36** to the LED string **26**.

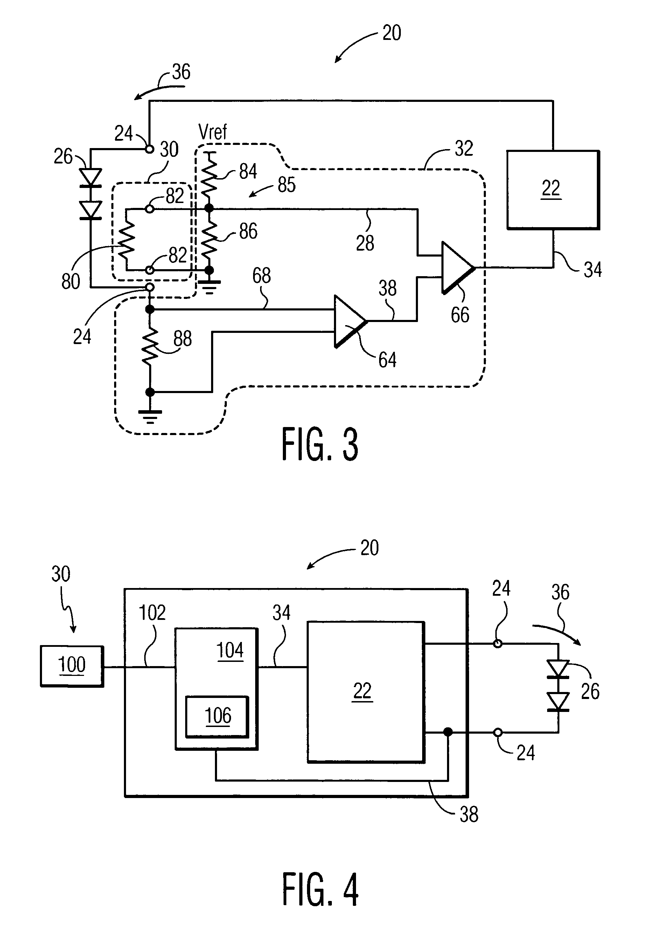

**FIGS. 2-4**, in which like elements share like reference numbers with **FIG. 1**, are schematic diagrams for embodiments of LED driving circuits with flux compensation made in accordance with the present invention. The embodiment of **FIG**. **2** uses connection points as the flux index selector, with the selected connection point for the LED string adjusting the sensed drive current signal through the gain block. The embodiment of **FIG. 3** uses a changeable component as the flux index selector, with the selected component value for the changeable component adjusting the drive current setpoint through the gain block. The embodiment of **FIG. 4** uses a data connection as the flux index selector, with selected flux data provided by the data connection and stored in the LED driver determining the flux indexed drive current.

Referring to **FIG. 2**, the flux index selector **30** includes first connection point **50** and second connection point **52**. The LED connector **24** includes an upstream terminal 54 and a downstream terminal **56**. Connection of the downstream terminal **56** to one of the connection points adjusts the gain signal of the gain block **32** by scaling the sensed drive current signal **38**.

The gain block **32** includes first resistor **58** connected between the first connection point **50** and the second connection point **52**, second resistor **60** connected between the second connection point **52** and common, current feedback amplifier **64** connected across the first resistor **58** and the second resistor **60**, third resistor **62** connected between the output and the negative input of the current feedback amplifier **64**, and error amplifier **66** connected across the output of the current feedback amplifier **64** and drive current setpoint **28**. The output of the error amplifier **66** provides the gain signal **34** to the power converter **22**. The sensed drive current signal **38** is generated in the sensed drive current circuit between the flux index selector **30** and the output of the current feedback amplifier **64**. The drive current setpoint **28** is generated in a drive current setpoint circuit at the input to the error amplifier **66**.

In operation, the user determines the flux bin index for the LED string and connects the downstream terminal **56** to the connection point corresponding to the flux bin index. For the example of a first flux bin index, the user connects downstream terminal **56** to the first connection point **50** corresponding to the first flux bin index. The flux indexed drive current **36** is sensed by the voltage drop across the first resistor **58** and the second resistor **60** to generate a sensed drive current voltage **68**. The sensed drive current voltage **68** is scaled by the current feedback amplifier **64** to generate the sensed drive current signal **38**. The error amplifier **66** compares the sensed drive current signal **38** and the drive current setpoint **28**, and provides the gain signal **34** to the power converter **22** to control the flux indexed drive current 36. The sensed drive current signal **38** is scaled in response to the first flux bin index. For the example of a second flux bin index, the user connects downstream terminal **56** to the second connection point **52** corresponding to the second flux bin index. The flux indexed drive current **36** is sensed by the voltage drop across the second resistor **60** to generate the sensed drive current voltage **68**. The sensed drive current voltage **68** is scaled by the current feedback amplifier **64** to generate the sensed drive current signal **38**. The error amplifier **66** compares the sensed drive current signal **38** and the drive current setpoint **28**, and provides the gain signal **34** to the power converter **22** to control the flux indexed drive current **36**. The sensed drive current signal **38** is scaled in response to the second flux bin index.

Those skilled in the art will appreciate that the series of sense resistors including the first resistor **58** and the second resistor **60** can be extended with additional resistors and additional connection points between the additional sense resistors to accommodate as many flux bin indexes as desired.

Referring to **FIG**. **3**, in which like elements share like reference numbers with **FIG. 2**, the flux index selector **30** is a changeable component **80**, such as a resistor, operably connected to a component connector **82**. The changeable component **80** is connected in parallel with a first resistor **86**. The first resistor **86** and a second resistor **84** are connected in series between a reference voltage Vref and common. Voltage divider 85 includes the first resistor **86**, the second resistor **84**, and the changeable component **80**. The voltage divider **85** provides the drive current setpoint **28** from the junction of the first resistor 86 and the second resistor **84**. The changeable component **80** adjusts the gain signal of the gain block **32** by scaling the drive current setpoint **28**.

The gain block **32** includes the first resistor **86** and the second resistor **84** connected in series between a reference voltage Vref and common, third resistor **88** connected in series with the LED string **26** and across current feedback amplifier **64**, and error amplifier **66** connected to the output of the current feedback amplifier **64** and between the junction of the first resistor **86** and the second resistor **84**. The output of the error amplifier **66** provides the gain signal **34** to the power converter **22**. The sensed drive current signal **38** is generated in the sensed drive current circuit between the third resistor **88** and the output of the current feedback amplifier 64. The drive current setpoint **28** is generated in a drive current setpoint circuit between the flux index selector **30** and the input to the error amplifier **66**.

In operation, the user determines the flux bin index for the LED string **26,** selects a changeable component **80** with a component value corresponding to the flux bin index, and connects the changeable component **80** at the component connector **82**. The changeable component **80** in this example is a resistor. The changeable component **80**, connected in parallel with the first resistor **86**, lowers the resistance of the voltage divider **85** between common and the junction of the first resistor **86** with the second resistor **84**, decreasing the drive current setpoint **28**. This creates a difference between the drive current setpoint 28 and the sensed drive current signal **38**: the power converter **22** reduces the flux indexed drive current **36** to reduce the sensed drive current signal **38** and balance out the system. The drive current setpoint **28** is scaled in response to the flux bin index.

Those skilled in the art will appreciate that the changeable component **80** is not limited to a resistor. The changeable component **80** can be a passive or active circuit, and can include one or more components, such as resistors, temperature compensating resistors, capacitors, inductors, and the like. Positive or negative temperature compensating resistors can be used as desired to compensate for changes in drive current requirements with changing operating temperature. In addition, the placement of the changeable component **80** is not limited to the example illustrated in **FIG.** 3 and is not limited to scaling the drive current setpoint **28.** In alternate embodiments, the changeable component **80** can be connected in series with or parallel to the third resistor **88** to scale the sensed drive current signal **38**. In other alternate embodiments, the changeable component **80** can be connected between the reference voltage Vref and the input to the error amplifier **66** to scale the drive current setpoint **28**.

Referring to **FIG.** 4, the flux index selector **30** is a data connection **100** providing flux data, which is stored in the LED driver **20**. The data connection **100** is operably connected to a microprocessor **104** with memory 106 and provides a data signal 102 with the flux data to the microprocessor **104**. The microprocessor **104** receives sensed drive current signal **38** and provides gain signal **34** to power converter **22**. LED string **26** is connected to LED connector **24** to receive flux indexed drive current **36** from the power converter **22**.

In operation, the LED driver **20** in the example of **FIG.** 4 functions much as the embodiments described in **FIGS. 2** **&** 3, but the microprocessor **104** acts as the gain block, comparing and scaling values in a microprocessor rather with discrete components. A drive current setpoint is compared to sensed drive current signal **38** and a gain signal **34** generated by the microprocessor **104** in response to the difference to control the flux indexed drive current 36 from the power converter **22.** The data signal **102** including the flux data can be provided to the LED driver **20** at the time of manufacture and/or can be provided after the LED driver **20** has been installed, such as by transmission over power lines, radio connections, or the like.

The flux data can include the drive current setpoint, a scaling factor for the drive current setpoint corresponding to the flux bin index of the particular LED string **26,** a scaling factor for the sensed drive current signal **38** corresponding to the flux bin index of the particular LED string **26,** and/or the flux bin index of the particular LED string **26.** In one embodiment, the flux data includes the drive current setpoint, which is the drive current setpoint for the flux bin index of the particular LED string **26.** In another embodiment, the drive current setpoint is a constant stored in the memory **106** and the flux data includes a drive current setpoint scaling factor corresponding to the flux bin index of the particular LED string 26. In yet another embodiment, the flux data includes a sensed drive current signal scaling factor corresponding to the flux bin index of the particular LED string **26.** In yet another embodiment, the flux data includes the flux bin index of the particular LED string **26.** The memory includes functions or tables to convert the flux bin index to scaling factors for the drive current setpoint and/or the sensed drive current signal **38.** Those skilled in the art will appreciate that the various setpoints, scaling factors, functions, and tables can be changed in the memory 106 as desired by downloading new values through the data connection **100.**

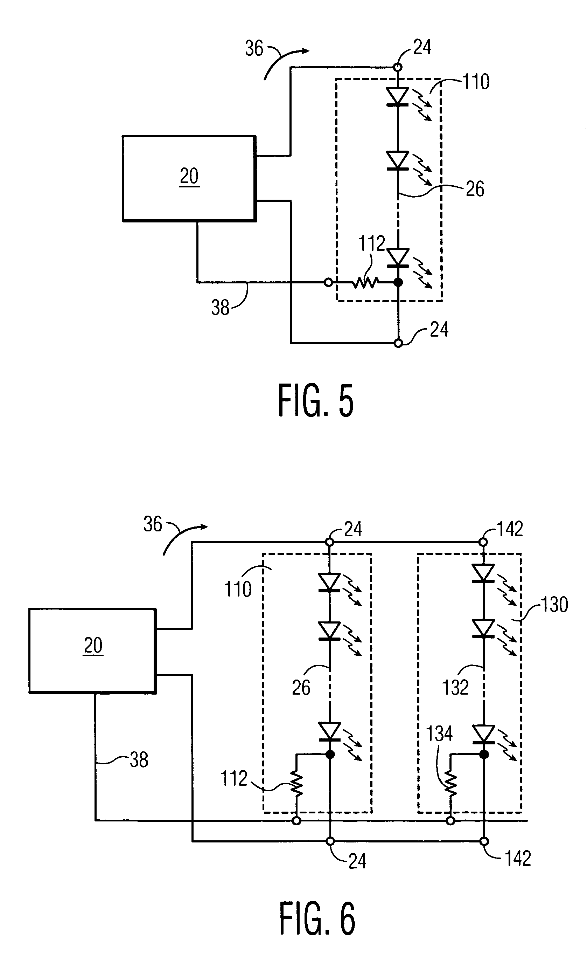

**FIGS. 5 &** 6, in which like elements share like reference numbers with **FIG.** 1, are schematic diagrams of a lighting system made in accordance with the present invention. FIG. 5 includes a single LED assembly and **FIG. 6** includes parallel LED assemblies. In this embodiment, each LED assembly includes an LED string and an associated component.

Referring to **FIG. 5****,** LED driver **20** provides flux indexed drive current 36 to LED assembly 110 through the LED connector **24.** The LED assembly **110** includes an LED string **26** with one or more LEDs and an associated component **112**, which is operably connected to the LED string **26** and provides sensed drive current signal **38** to the LED driver **20**. The LED string **26** has a high voltage end where the flux indexed drive current **36** enters the LED string **26** and a low voltage end where the flux indexed drive current **36** exits the LED string **26.** The LED driver **20** is responsive to the sensed drive current signal **38** to adjust the flux indexed drive current **36**. The component value of the associated component **112** can be selected as corresponding to the flux bin index of the LED string **26**. In this example, the associated component **112** is a resistor. The associated component **112** can be integral to the LED assembly **110** and/or the LED string **26**.

Referring to **FIG. 6**, a second LED assembly **130** can be connected in parallel with the LED assembly **110** by connecting the LED connector **142** to the LED connector **24**. The second LED assembly **130** includes an LED string **26** with one or more LEDs and an associated component **134**, which is operably connected to the LED string **132** and is operably connected in parallel with the associated component **112** to provide the sensed drive current signal **38** to the LED driver **20**. In this example, the associated component **134** is a resistor. The second LED assembly **130** can have different current requirements than the LED assembly **110**, but typically has the same voltage requirement.

In operation, paralleling the associated components for parallel LED assemblies scales the sensed drive current signal **38** to produce the proper flux indexed drive current **36**. For example, assume a resistance value of 100 Ohms for the associated components with an applied voltage of 100 Volts across the LED connector. For a single LED assembly as illustrated in **FIG. 5**, the sensed drive current signal **38** corresponds to 100V/ 100Ω or 1 Amp drive current. For parallel LED assemblies as illustrated in **FIG. 6**, the sensed drive current signal **38** corresponds to 100V/ 50Ω or 2 Amps drive current, double that of the single LED assembly case. The resistance values of the associated components need not be equal and can be unequal for LED assemblies with different drive current requirements. Continuing the example above with an applied voltage of 100 Volts across the LED connector, for one LED assembly requiring 0.5 Amps and having an associated component resistance value of 200 Ohms, and three LED assemblies requiring 0.1 Amps and having an associated component resistance value of 1000 Ohms, the sensed drive current signal **38** corresponds to 100V/ 125Ω or 0.8 Amps drive current.

Those skilled in the art will appreciate that numerous useful variations can be made to the examples of **FIG.** 5 **& 6****.** In one embodiment, the associated components can be passive or active circuits, and can include one or more components, such as resistors, temperature compensating resistors, capacitors, inductors, and the like. For inductors, the LED driver **20** can impose a high frequency signal on the flux indexed drive current **36** to detect the inductors. For resistors, the resistors can be positive or negative temperature compensating resistors, as desired, to compensate for changes in drive current requirements with changing operating temperature. In addition, the placement of the associated components is not limited to the example illustrated. The associated components can be connected to the high side of the LED string or in parallel with the LED string. For parallel connection of resistors as the associated components, the LED driver **20** can apply a small reverse voltage when the circuit is energized, periodically, or constantly to detect the resistor value. In one embodiment, the associated component can detect failure of the associated LED string and direct the LED driver **20** to shut off the flux indexed drive current **36** to avoid damage to the remaining good LED assemblies. In another embodiment, LED assemblies having the same nominal current requirements are connected in series and the associated component of one of the LED assemblies is connected to the LED driver **20** to provide the sensed drive current signal **38.** The single associated component controls the flux indexed drive current **36** for the whole series of LED assemblies.

While the embodiments of the invention disclosed herein are presently considered to be preferred, various changes and modifications can be made without departing from the scope of the invention. Those skilled in the art will appreciate that the embodiments described for **FIGS. 1-6** are exemplary and that alternative circuits can be used as desired for particular applications. The scope of the invention is indicated in the appended claims, and all changes that come within the meaning and range of equivalents are intended to be embraced therein.

## Claims

1. A driver for a light emitting diode (LED) string having an associated flux bin index comprising:
a power converter **22**, the power converter **22** being responsive to a gain signal **34** and generating flux indexed drive current **36**; and
an LED connector **24**, the LED connector **24** being operably connected to the power converter **22** and operable to receive the LED string **26**; **CHARACTERIZED IN THAT**
the driver further comprises a gain block **32**, the gain block **32** comparing a sensed drive current signal **38** and a drive current setpoint **28** to generate the gain signal **34;** and
wherein the gain block **32** is responsive to a flux index selector **30** to adjust the gain signal 34 for the associated flux bin index.

2. The driver of claim 1 wherein the flux index selector **30** comprises a plurality of connection points, each of the connection points having a corresponding flux bin index, and connection of the LED connector **24** to one of the connection points adjusts the sensed drive current signal **38** for the corresponding flux bin index.

3. The driver of claim 1 wherein the flux index selector **30** comprises a changeable component **80**, the changeable component **80** having a corresponding flux bin index, and selection of the changeable component **80** adjusts the sensed drive current signal **38** for the corresponding flux bin index.

4. The driver of claim 3 wherein the changeable component **80** is selected from the group consisting of a resistor, a temperature compensating resistor, a capacitor, and an inductor.

5. The driver of claim 1 wherein the flux index selector **30** comprises a data connection **100** and the gain block **32** comprises a microprocessor **104**.

6. The driver of claim 5 wherein the data connection **100** provides flux data to the microprocessor **104**, the flux data being selected from the group consisting of the drive current setpoint, a drive current setpoint scaling factor having a first corresponding flux bin index, a sensed drive current signal scaling factor having a second corresponding flux bin index, and the associated flux bin index.

7. The driver of claim 6 wherein the microprocessor **104** has memory **106** for storing the flux data.

8. The driver of claim 1 wherein flux index selector **30** comprises an associated component **112**, the associated component **112** being integral to the LED string **26**.

9. The driver of claim 8 wherein the associated component **112** is selected from the group consisting of a resistor, a temperature compensating resistor, a capacitor, and a inductor.

10. The driver of claim 1 wherein flux index selector **30** comprises a plurality of associated components **112** operably connected in parallel, each of the plurality of associated components **112** being associated with one of a plurality of LED strings.

11. A flux control method for a light emitting diode (LED) string comprising:
providing a drive current setpoint;
passing a drive current through the LED string;
sensing the drive current to generate a sensed drive current signal; and
controlling the drive current in response to a difference between the sensed drive current signal and the drive current setpoint; **CHARACTERIZED BY**
determining a flux bin index for the LED string; and
scaling at least one of the sensed drive current signal and the drive current setpoint in response to the flux bin index.

12. The method of claim 11 wherein the sensed drive current is scaled by:
providing a plurality of connection points, each of the connection points having a corresponding flux bin index; and
connecting the LED string to the connection point corresponding to the flux bin index determined for the LED string.

13. The method of claim 11 wherein the sensed drive current signal is generated in a sensed drive current circuit and the sensed drive current signal is scaled by adjusting impedance of the sensed drive current circuit.

14. The method of claim 11 wherein the drive current setpoint is generated in a drive current setpoint circuit and the drive current setpoint is scaled by adjusting impedance of the drive current setpoint circuit.

15. A flux control system for a light emitting diode (LED) string having an associated flux bin index comprising:
means for providing a drive current setpoint;
means for passing a drive current through the LED string;
means for sensing the drive current to generate a sensed drive current signal;
means for controlling the drive current in response to a difference between the sensed drive current signal and the drive current setpoint; **CHARACTERIZED IN THAT**
the flux control system further comprises means for scaling at least one of the sensed drive current signal and the drive current setpoint for the associated flux bin index.

16. The system of claim 15 wherein the scaling means comprises a plurality of means for connecting LED strings, each of the connecting means having a corresponding flux bin index.

17. The system of claim 15 wherein the means for scaling comprises means selected from the group consisting of means for adjusting impedance of the providing means and means for adjusting impedance of the sensing means.

18. A lighting system comprising:
a light emitting diode (LED) driver **20** according to any of the claims 1 to 10;
a flux index selector **30**; and
a first LED assembly **110**, the first LED assembly **110** having a first LED string 26 operably connected to a first associated component **112**;
wherein the first LED assembly **110** is operably connected to the LED driver **20** and the first associated component **112** generates the sensed drive current signal **38**.

19. The system of claim 18 wherein the first LED string **26** has a high voltage end and a low voltage end, and the first associated component **112** is operably connected to the first LED string **26** in a manner selected from the group consisting of a series connection with the high voltage end, a series connection with the low voltage end, and a parallel connection between the high voltage end and the low voltage end.

20. The system of claim 18 further comprising:
a second LED assembly **130**, the second LED assembly **130** having a second LED string **132** operably connected to a second associated component **134**;
wherein the second LED assembly **130** is operably connected parallel to the first LED assembly **110** and the second associated component **134** is operably connected parallel to the first associated component **112**.

21. The system of claim 18 wherein the first associated component **112** is selected from the group consisting of a resistor, a temperature compensating resistor, a capacitor, and an inductor.

22. The system of claim 18 wherein the first associated component **112** is a resistor operably connected parallel to the first LED string **26** and the LED driver **20** is operable to apply a reverse voltage to the first associated component **112**.

23. The system of claim 22 wherein the LED driver **20** is operable to apply the reverse voltage at a time selected from the group consisting of when the LED driver **20** is energized and periodic times.

24. The system of claim 18 wherein the first associated component **112** is operable to shut off the LED driver **20** on the failure of the first LED string **26**.

## Patentansprüche

1. Treiber für eine Leuchtdioden-(LED) Kette mit einem zugeordneten Fluss-Bin-Index, mit:
- einem Leistungswandler 22, wobei der Leistungswandler 22 auf ein Verstärkungssignal 34 anspricht und Fluss-indexierten Ansteuerungsstrom 36 erzeugt; sowie
- einem LED-Stecker 24, wobei der LED-Stecker 24 mit dem Leistungswandler 22 in Wirkverbindung steht und dazu ausgebildet ist, die LED-Kette 26 aufzunehmen,
**dadurch gekennzeichnet, dass**
- der Treiber weiterhin einen Verstärkungsblock 32 umfasst, wobei der Verstärkungsblock 32 ein abgetastetes Ansteuerungsstromsignal 38 und einen Ansteuerungsstrom-Sollwert 28 vergleicht, um das Verstärkungssignal 34 zu erzeugen, und
- wobei der Verstärkungsblock 32 auf einen Fluss-Index-Selektor 30 anspricht, um das Verstärkungssignal 34 für den zugeordneten Fluss-Bin-Index einzustellen.

2. Treiber nach Anspruch 1, wobei der Fluss-Index-Selektor 30 eine Mehrzahl von Verbindungspunkten umfasst, wobei jeder der Verbindungspunkte einen entsprechenden Fluss-Bin-Index aufweist, und durch Verbindung des LED-Steckers 24 mit einem der Verbindungspunkte das abgetastete Ansteuerungsstromsignal 38 für den entsprechenden Fluss-Bin-Index eingestellt wird.

3. Treiber nach Anspruch 1, wobei der Fluss-Index-Selektor 30 ein wechselbares Bauelement 80 umfasst, wobei das wechselbare Bauelement 80 einen entsprechenden Fluss-Bin-Index aufweist, und durch Wahl des wechselbaren Bauelements 80 das abgetastete Ansteuerungsstromsignal 38 für den entsprechenden Fluss-Bin-Index eingestellt wird.

4. Treiber nach Anspruch 3, wobei das wechselbare Bauelement 80 aus der aus einem Widerstand, einem Temperaturausgleichswiderstand, einem Kondensator und einem Induktor bestehenden Gruppe ausgewählt wird.

5. Treiber nach Anspruch 1, wobei der Fluss-Index-Selektor 30 eine Datenverbindung 100 und der Verstärkungsblock 32 einen Mikroprozessor 104 umfassen.

6. Treiber nach Anspruch 5, wobei die Datenverbindung 100 dem Mikroprozessor 104 Flussdaten zuführt, wobei die Flussdaten aus der aus dem Ansteuerungsstrom-Sollwert, einem Skalierungsfaktor für den Ansteuerungsstrom-Sollwert mit einem ersten entsprechenden Fluss-Bin-Index, einem Skalierungsfaktor für das abgetastete Ansteuerungsstromsignal mit einem zweiten entsprechenden Fluss-Bin-Index sowie dem zugeordneten Fluss-Bin-Index bestehenden Gruppe ausgewählt werden.

7. Treiber nach Anspruch 6, wobei der Mikroprozessor 104 einen Speicher 106 zur Speicherung der Flussdaten aufweist.

8. Treiber nach Anspruch 1, wobei der Fluss-Index-Selektor 30 ein zugeordnetes Bauelement 112 umfasst, wobei das zugeordnete Bauelement 112 mit der LED-Kette 26 integral ist.

9. Treiber nach Anspruch 8, wobei das zugeordnete Bauelement 112 aus der aus einem Widerstand, einem Temperaturausgleichswiderstand, einem Kondensator und einem Induktor bestehenden Gruppe ausgewählt wird.

10. Treiber nach Anspruch 1, wobei der Fluss-Index-Selektor 30 eine Mehrzahl von zugeordneten Bauelementen 112 umfasst, die parallel zueinander in Wirkverbindung stehen, wobei jedes der Mehrzahl von zugeordneten Bauelementen 112 einer von mehreren LED-Ketten zugeordnet ist.

11. Flusssteuerverfahren für eine Leuchtdioden-(LED) Kette, welches die folgenden Schritte umfasst:
- Vorsehen eines Ansteuerungsstrom-Sollwerts;
- Hindurchführen eines Ansteuerungsstroms durch die LED-Kette;
- Abtasten des Ansteuerungsstroms zur Erzeugung eines abgetasteten Ansteuerungsstromsignals; sowie
- Steuerung des Ansteuerungsstroms in Reaktion auf eine Differenz zwischen dem abgetasteten Ansteuerungsstromsignal und dem Ansteuerungsstrom-Sollwert;
**gekennzeichnet durch**
- Bestimmen eines Fluss-Bin-Index für die LED-Kette sowie
- Skalieren von zumindest dem abgetasteten Ansteuerungsstromsignal oder Ansteuerungsstrom-Sollwert in Reaktion auf den Fluss-Bin-Index.

12. Verfahren nach Anspruch 11, wobei der abgetastete Ansteuerungsstrom skaliert wird durch:
- Vorsehen einer Mehrzahl von Verbindungspunkten, wobei jeder der Verbindungspunkte einen entsprechenden Fluss-Bin-Index aufweist; sowie
- Verbinden der LED-Kette mit dem Verbindungspunkt entsprechend dem für die LED-Kette bestimmten Fluss-Bin-Index.

13. Verfahren nach Anspruch 11, wobei das abgetastete Ansteuerungsstromsignal in einer Schaltung zum Abtasten des Ansteuerungsstroms erzeugt und das abgetastete Ansteuerungsstromsignal durch Einstellen der Impedanz der Schaltung zum Abtasten des Ansteuerungsstroms skaliert wird.

14. Verfahren nach Anspruch 11, wobei der Ansteuerungsstrom-Sollwert in einer Ansteuerungsstrom-Sollwert-Schaltung erzeugt und der Ansteuerungsstrom-Sollwert durch Einstellen der Impedanz der Ansteuerungsstrom-Sollwert-Schaltung skaliert wird.

15. Flusssteuersystem für eine Leuchtdioden-(LED) Kette mit einem zugeordneten Fluss-Bin-Index, mit:
- Mitteln zum Vorsehen eines Ansteuerungsstrom-Sollwerts;
- Mitteln zum Hindurchführen eines Ansteuerungsstroms durch die LED-Kette;
- Mitteln zum Abtasten des Ansteuerungsstroms, um ein abgetastetes Ansteuerungsstromsignal zu erzeugen;
- Mitteln zur Steuerung des Ansteuerungsstroms in Reaktion auf eine Differenz zwischen dem abgetasteten Ansteuerungsstromsignal und dem Ansteuerungsstrom-Sollwert;
**dadurch gekennzeichnet, dass**
das Flusssteuersystem weiterhin Mittel zum Skalieren von zumindest dem abgetasteten Ansteuerungsstromsignal oder dem Ansteuerungsstrom-Sollwert für den zugeordneten Fluss-Bin-Index umfasst.

16. System nach Anspruch 15, wobei die Skalierungsmittel eine Mehrzahl von Mitteln zum Verbinden von LED-Ketten umfasst, wobei jedes der Verbindungsmittel einen entsprechenden Fluss-Bin-Index aufweist.

17. System nach Anspruch 15, wobei die Mittel zum Skalieren Mittel umfassen, die aus der aus Mitteln zum Einstellen der Impedanz der Vorsehungsmittel sowie Mitteln zum Einstellen der Impedanz der Abtastmittel bestehenden Gruppe ausgewählt werden.

18. Beleuchtungssystem mit:
- einem Leuchtdioden-(LED) Treiber 20 nach einem der Ansprüche 1 bis 10;
- einem Fluss-Index-Selektor 30; sowie
- einer ersten LED-Anordnung 110, wobei die erste LED-Anordnung 110 eine erste LED-Kette 26 aufweist, die mit einem ersten zugeordneten Bauelement 112 in Wirkverbindung steht;
- wobei die erste LED-Anordnung 110 mit dem LED-Treiber 20 in Wirkverbindung steht und das erste zugeordnete Bauelement 112 das abgetastete Ansteuerungsstromsignal 38 erzeugt.

19. System nach Anspruch 18, wobei die erste LED-Kette 26 eine Hochspannungsseite und eine Niederspannungsseite aufweist und das erste zugeordnete Bauelement 112 mit der LED-Kette 26 in einer Weise, die aus der aus einer Serienschaltung mit der Hochspannungsseite, einer Serienschaltung mit der Niederspannungsseite sowie einer Parallelschaltung zwischen der Hochspannungsseite und der Niederspannungsseite bestehenden Gruppe ausgewählt wird, in Wirkverbindung steht.

20. System nach Anspruch 18, welches weiterhin umfasst:
- eine zweite LED-Anordnung 130, wobei die zweite LED-Anordnung 130 eine zweite LED-Kette 132 aufweist, die mit einem zweiten zugeordneten Bauelement 134 in Wirkverbindung steht,
- wobei die zweite LED-Anordnung 139 mit der ersten LED-Anordnung 110 parallel zu dieser und das zweite zugeordnete Bauelement 134 mit dem ersten zugeordneten Bauelement 112 parallel zu diesem in Wirkverbindung stehen.

21. System nach Anspruch 18, wobei das erste zugeordnete Bauelement 112 aus der aus einem Widerstand, einem Temperaturausgleichswiderstand, einem Kondensator und einem Induktor bestehenden Gruppe ausgewählt wird.

22. System nach Anspruch 18, wobei das erste zugeordnete Bauelement 112 ein mit der ersten LED-Kette 26 parallel zu dieser in Wirkverbindung stehender Widerstand und der LED-Treiber dazu ausgebildet ist, an das erste zugeordnete Bauelement 112 eine Rückspannung anzulegen.

23. System nach Anspruch 22, wobei der LED-Treiber dazu ausgebildet ist, die Rückspannung zu einem Zeitpunkt anzulegen, der aus der aus dem Zeitpunkt der Stromzuführung zu dem LED-Treiber 20 sowie periodischen Zeitpunkten bestehenden Gruppe ausgewählt wird.

24. System nach Anspruch 18, wobei das erste zugeordnete Bauelement 112 dazu ausgebildet ist, den LED-Treiber 20 bei Ausfall der ersten LED-Kette 26 abzuschalten.

## Revendications

1. Circuit d'attaque pour une chaîne de diodes électroluminescentes (DEL) ayant un indice associé de casier de flux comprenant :
un convertisseur de puissance **22**, le convertisseur de puissance **22** étant sensible à un signal de gain **34** et générant un courant indexé d'attaque de flux **36 ;** et
un connecteur DEL **24**, le connecteur DEL **24** étant connecté opérationnellement au convertisseur de puissance **22** et étant opérationnel de manière à recevoir la chaîne de diodes électroluminescentes **26**, **caractérisé en ce que** :
le circuit d'attaque comprend encore un bloc de gain **32**, le bloc de gain **32** comparant un signal détecté de courant d'attaque **38** et un point de consigne de courant d'attaque **28** pour générer le signal de gain **34**; et
dans lequel le bloc de gain 32 est sensible à un sélecteur d'indice de flux **30** pour ajuster le signal de gain **34** pour l'indice associé de casier de flux.

2. Circuit d'attaque 1 selon la revendication 1, dans lequel le sélecteur d'indice de flux **30** comprend une pluralité de points de connexion, chacun des points de connexion ayant un indice correspondant de casier de flux et dans lequel la connexion du connecteur DEL **24** à un des points de connexion ajuste le signal détecté de courant d'attaque **38** pour l'indice correspondant de casier de flux.

3. Circuit d'attaque selon la revendication 1, dans lequel le sélecteur d'indice de flux 30 comprend un composant variable **80**, le composant variable **80** ayant un indice correspondant de casier de flux et dans lequel la sélection du composant variable **80** ajuste le signal détecté de courant d'attaque **38** pour l'indice correspondant de casier de flux.

4. Circuit d'attaque selon la revendication 3, dans lequel le composant variable **80** est sélectionné parmi le groupe qui est constitué d'une résistance, d'une résistance de compensation de température, d'un condensateur et d'une inductance.

5. Circuit d'attaque selon la revendication 1, dans lequel le sélecteur d'indice de flux **30** comprend une connexion de données 100 et dans lequel le bloc de gain **32** comprend un microprocesseur **104**.

6. Circuit d'attaque selon la revendication 5, dans lequel la connexion de données **100** fournit des données de flux au microprocesseur **104**, les données de flux étant sélectionnées parmi le groupe qui est constitué du point de consigne de courant d'attaque, d'un facteur d'échelle de point de consigne de courant d'attaque ayant un premier indice correspondant de casier de flux, d'un facteur d'échelle de signal détecté de courant d'attaque ayant un deuxième indice correspondant de casier de flux, et de l'indice associé de casier de flux.

7. Circuit d'attaque selon la revendication 6, dans lequel le microprocesseur **104** présente une mémoire **106** pour stocker les données de flux.

8. Circuit d'attaque selon la revendication 1, dans lequel le sélecteur d'indice de flux **30** comprend un composant associé **112**, le composant associé **112** faisant corps avec la chaîne de diodes électroluminescentes **26**.

9. Circuit d'attaque selon la revendication 8, dans lequel le composant associé **112** est sélectionné parmi le groupe qui est constitué d'une résistance, d'une résistance de compensation de température, d'un condensateur et d'une inductance.

10. Circuit d'attaque selon la revendication 1, dans lequel le sélecteur d'indice de flux **30** comprend une pluralité de composants associés **112** qui sont connectés opérationnellement en parallèle, chacun de la pluralité de composants associés **112** étant associé à une d'une pluralité de chaînes de diodes électroluminescentes.

11. Procédé de commande de flux pour une chaîne de diodes électroluminescentes (DEL) comprenant les étapes suivantes consistant à :
fournir un point de consigne de courant d'attaque ;
faire passer un courant d'attaque à travers la chaîne de diodes électroluminescentes ;
détecter le courant d'attaque de manière à générer un signal détecté de courant d' attaque ; et
commander le courant d'attaque en réponse à une différence entre le signal détecté de courant d'attaque et le point de consigne de courant d'attaque ; **caractérisé par** les étapes suivantes consistant à :
déterminer un indice de casier de flux pour la chaîne de diodes électroluminescentes ; et
mettre à échelle au moins un du signal détecté de courant d'attaque et le point de consigne de courant d'attaque en réponse à l'indice de casier de flux.

12. Procédé selon la revendication 11, dans lequel le courant d'attaque détecté est mis à échelle par les étapes suivantes consistant à :
fournir une pluralité de points de connexion, chacun des points de connexion ayant un indice correspondant de casier de flux ; et
connecter la chaîne de diodes électroluminescentes au point de connexion correspondant à l'indice de casier de flux qui est déterminé pour la chaîne de diodes électroluminescentes.

13. Procédé selon la revendication 11, dans lequel le signal détecté de courant d'attaque est généré dans un circuit détecté de courant d'attaque et dans lequel le signal détecté de courant d'attaque est mis à échelle par l'ajustement de l'impédance du circuit détecté de courant d'attaque.

14. Procédé selon la revendication 11, dans lequel le point de consigne de courant d'attaque est généré dans un circuit de point de consigne de courant d'attaque et
dans lequel le point de consigne de courant d'attaque est mis à échelle par l'ajustement de l'impédance du circuit de point de consigne de courant d'attaque.

15. Système de commande de flux pour une chaîne de diodes électroluminescentes (DEL) ayant un indice associé de casier de flux comprenant:
des moyens pour fournir un point de consigne de courant d'attaque ;
des moyens pour faire passer un courant d'attaque à travers la chaîne de diodes électroluminescentes ;
des moyens pour détecter le courant d'attaque de manière à générer un signal détecté de courant d' attaque ;
des moyens pour commander le courant d'attaque en réponse à une différence entre le signal détecté de courant d'attaque et le point de consigne de courant d'attaque ; **caractérisé en ce que** le système de commande de flux comprend encore des moyens pour mettre à échelle au moins un du signal détecté de courant d'attaque et le point de consigne de courant d'attaque pour l'indice associé de casier de flux.

16. Système selon la revendication 15, dans lequel les moyens de mise à échelle comprennent une pluralité de moyens pour connecter les chaînes de diodes électroluminescentes, chacun des moyens de connexion ayant un indice correspondant de casier de flux.

17. Système selon la revendication 15, dans lequel les moyens pour la mise à échelle comprennent des moyens qui sont sélectionnés parmi le groupe qui est constitué de moyens pour ajuster l'impédance des moyens de fourniture et de moyens pour ajuster l'impédance des moyens de détection.

18. Système d'éclairage comprenant :
un circuit d'attaque de diodes électroluminescentes (DEL) **20** selon l'une quelconque des revendications précédentes 1 à 10 ;
un sélecteur d'indice de flux **30**; et
un premier ensemble de diodes électroluminescentes **110**, le premier ensemble de diodes électroluminescentes **110** ayant une première chaîne de diodes électroluminescentes **26** qui est connectée opérationnellement à un premier composant associé **112**;
dans lequel le premier ensemble de diodes électroluminescentes **110** est connecté opérationnellement au circuit d'attaque de diodes électroluminescentes **112** et dans lequel le premier composant associé **112** génère le signal détecté de courant d'attaque **38**.

19. Système selon la revendication 18, dans lequel la première chaîne de diodes électroluminescentes **26** présente une extrémité à haute tension et une extrémité à basse tension et dans lequel le premier composant associé **112** est connecté opérationnellement à la première chaîne de diodes électroluminescentes **26** d'une manière qui est sélectionnée parmi le groupe qui est constitué d'une connexion en série à l'extrémité à haute tension, d'une connexion en série à l'extrémité à basse tension et d'une connexion en parallèle entre l'extrémité à haute tension et l'extrémité à basse tension.

20. Système selon la revendication 18, comprenant encore :
un deuxième ensemble de diodes électroluminescentes **130,** le deuxième ensemble de diodes électroluminescentes **130** ayant une deuxième chaîne de diodes électroluminescentes 132 qui est connectée opérationnellement à un deuxième composant associé **134**;
dans lequel le deuxième ensemble de diodes électroluminescentes **130** est connecté opérationnellement au premier ensemble de diodes électroluminescentes **110** et dans lequel le deuxième composant associé **134** est connecté opérationnellement en parallèle au premier composant associé **112**.

21. Système selon la revendication 18, dans lequel le premier composant associé **112** est sélectionné parmi le groupe qui est constitué d'une résistance, d'une résistance de compensation de température et d'une inductance.

22. Système selon la revendication 18, dans lequel le premier composant associé **112** est une résistance qui est connectée opérationnellement en parallèle à la première chaîne de diodes électroluminescentes **26** et dans lequel le circuit d'attaque de diodes électroluminescentes **20** est opérationnel de manière à appliquer une tension inverse au premier composant associé **112**.

23. Système selon la revendication 22, dans lequel le circuit d'attaque de diodes électroluminescentes **20** est opérationnel de manière à appliquer la tension inverse à un moment qui est sélectionné parmi le groupe qui est constitué du moment où le circuit d'attaque de diodes électroluminescentes **20** est excité et de temps périodiques.

24. Système selon la revendication 18, dans lequel le premier composant associé **112** est opérationnel de manière à couper le circuit d'attaque de diodes électroluminescentes **20** dans le cas de défaillance de la première chaîne de diodes électroluminescentes **26**.
